# EUROPEAN PATENT SPECIFICATION

(11) **EP 3 851 389 B1**
(45) Date of publication and mention of the grant of the patent: **06.11.2024**
(21) Application number: 19881837.9
(22) Date of filing: 26.09.2019
(51) Int. Cl.: B65B 51/30, B29C 65/08, B29C 65/00, B29C 65/74, B29C 65/50, B65B 9/20, B65B 51/04, B29C 65/48

(54) **FILLING PACKAGING MACHINE, CONTENT FILLING CONTAINER, AND MANUFACTURING METHOD THEREFOR**
ABFÜLLUNGSVERPACKUNGSMASCHINE, INHALTSBEFÜLLUNGSBEHÄLTER UND HERSTELLUNGSVERFAHREN DAFÜR
MACHINE DE CONDITIONNEMENT ET D'EMBALLAGE, RÉCIPIENT DE CONDITIONNEMENT DE CONTENU ET PROCÉDÉ DE FABRICATION ASSOCIÉ

(30) Priority: 06.11.2018 JP 2018208549; 31.01.2019 JP 2019015864
(43) Date of publication of application: 21.07.2021
(73) Proprietor: Shikoku Kakoki Co., Ltd., Itano-gun, Tokushima 771-0287 (JP); Nippon Paper Industries Co., Ltd., Tokyo 114-0002 (JP)
(72) Inventor: MORIKAWA Yasuhiro, Itano-gun, Tokushima 771-0287 (JP); SATO Seiji, Itano-gun, Tokushima 771-0287 (JP); SORA Hiroshi, Itano-gun, Tokushima 771-0287 (JP); SASE Kazuhiko, Tokyo 114-0002 (JP); MIYAGAWA Shigekazu, Tokyo 114-0002 (JP)
(74) Representative: Staeger & Sperling Partnerschaftsgesellschaft mbB
(86) International application number: PCT/JP2019/037870
(87) International publication number: WO 2020/095562

(56) References cited:
- JP-A- 2003 191 917
- JP-A- 2003 221 016
- JP-A- 2008 137 702
- JP-A- 2008 137 702
- JP-A- 2008 143 523
- JP-A- 2008 143 523
- JP-A- 2008 207 830
- JP-A- 2008 207 830
- JP-A- 2009 184 724
- JP-A- 2015 101 395
- JP-A- 2015 101 395
- US-A1- 2018 186 087
- US-A1- 2018 222 617

## Description

### Technical Field

The present invention relates to a manufacturing method for a content filling container by filling and packaging contents, such as a fluid food or a beverage, into a container formed of a web-like packaging material mainly composed of e.g. paper, to a content filling container manufactured by the method, and to a filling packaging machine for use in the method.

### Background Art

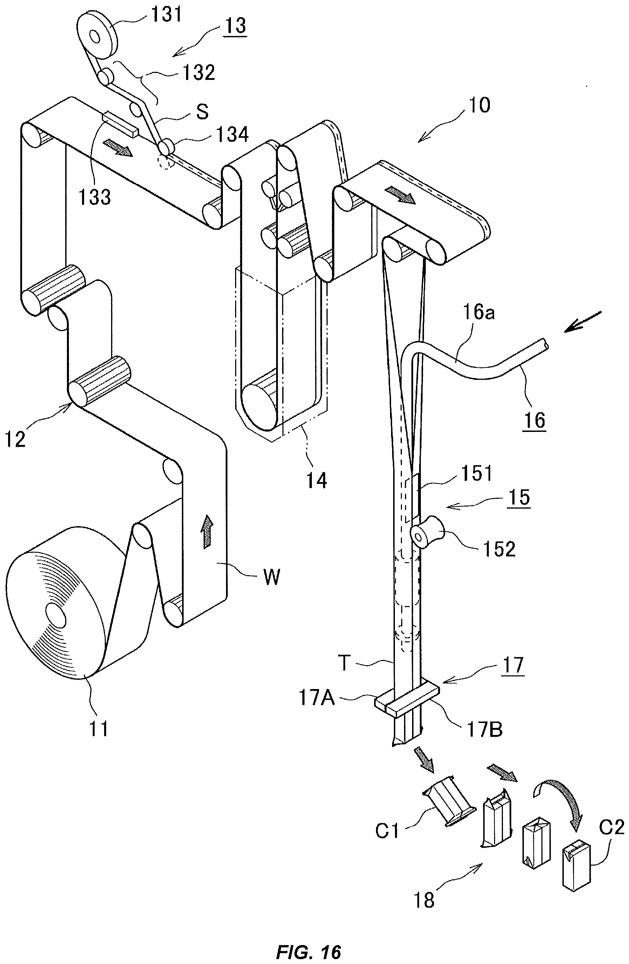

A filling packaging machine as shown in FIG. 16 is known which manufactures a content filling container by filling and packaging contents, such as a fluid food or a beverage, into a container using, for example, a web-like packaging material composed of a laminate consisting of a substrate layer of e.g. paper and sealant layers of a thermoplastic resin formed on both surfaces of the substrate layer.

The filling packaging machine (10) includes a rewinder (11) that supports a web-like packaging material (W) wound in the shape of a roll, a rewinding device (12) for sequentially rewinding the web-like packaging material (W) from the rewinder (11), a tape attachment device (13) for attaching a sealing tape (S) of a thermoplastic resin to one end of one surface of the rewound web-like packaging material (W) such that the sealing tape (S) partly protrudes outside the packaging material (W) in the width direction, a sterilization tank (14) for sterilizing the web-like packaging material (W) by immersing it in a sterilizing liquid such as a hydrogen peroxide solution, a vertical sealing device (15) for vertically sealing both ends of the web-like packaging material (W) such that they overlap with each other by a predetermined width to form a tubular packaging material (T) and to attach the protruding portion of the sealing tape (S) to the inner surface of the tubular packaging material (T) so that it can cover an inner step (one end surface of the web-like packaging material) of the overlapping portion, a content filling device (16) for filing fluid contents into the tubular packaging material (T) through a filling tube (16a) inserted into the tubular packaging material (T) from above, a lateral sealing device (17) for laterally sealing the tubular packaging material (T), filled with the contents, at an interval corresponding to the length of one container, and cutting the laterally sealed portion at an intermediate position in the width direction to form a pillar-shaped content filling container (C1) in an intermediate form, and a container completing device (18) for shaping the container (C1) into a rectangular content filling container (C2) in a completed form.

The tape attachment device (13) includes a tape reel (131) on which the sealing tape (S) is wound in the shape of a roll, a tape rewinding device (132) for sequentially rewinding the sealing tape (S) from the tape reel (131), a heater (133) for preheating the one end of the one surface of the web-like packaging material (W) to which the sealing tape (S) is to be attached, and a pair of pressure rollers (134) for bringing the sealing tape (S) into pressure contact with the one end of the one surface of the web-like packaging material (W) to seal it.

The vertical sealing device (15) includes a heater (151) for preheating both ends of the web-like packaging material (W) and the sealing tape (S) during the intermediate process of shaping the web-like packaging material (W) into a tube by means of not-shown shaping rolls, and a pair of pressure rollers (152) for bringing the sealing tape (S) into pressure contact with the overlapping both ends of the web-like packaging material (W) to seal the overlapping portion.

The lateral sealing device (17) may be of a known type such as a heat sealing type, a high-frequency sealing type, or an ultrasonic sealing type.

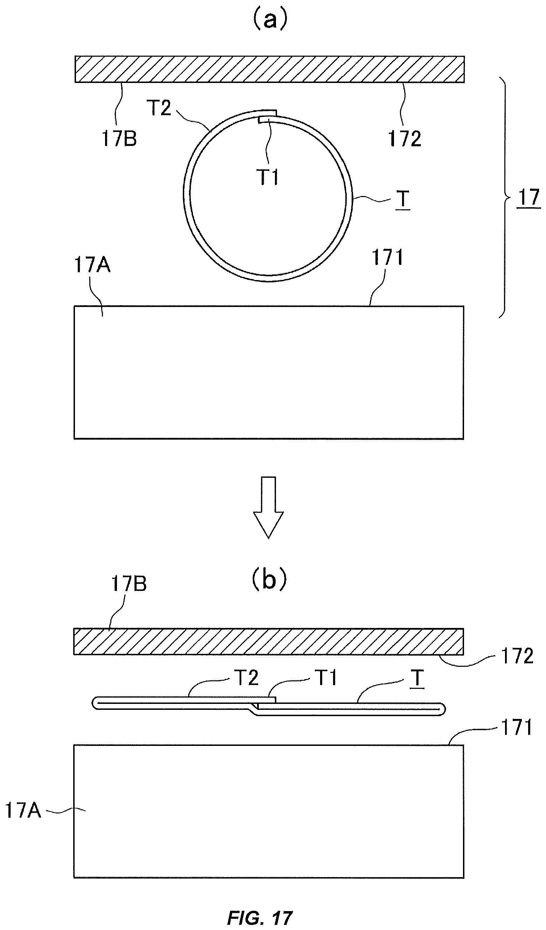

When the lateral sealing device (17) is of the ultrasonic sealing type, it includes an ultrasonic horn (17A) and an anvil (17B) which are openably/closably disposed on opposite sides of the tubular packaging material (T), as shown in FIG. 17. The ultrasonic horn (17A) and the anvil (17B) have sealing surfaces (171), (172) facing each other and extending in a direction perpendicular to the length direction of the tubular packaging material (T). Though not shown diagrammatically, the ultrasonic horn (17A) and the anvil (17B) are provided with shaping flaps for holding the tubular packaging material (T) from both sides to pre-shape it into a predetermined container shape (e.g., a square cross-sectional shape).

Upon lateral sealing, the tubular packaging material (T) is locally pinched at a predetermined height position by the sealing surfaces (171), (172) of the ultrasonic horn (17A) and the anvil (17B) with a predetermined pressing force, whereby the tubular packaging material (T) is deformed into a flattened shape. While keeping the two portions of the flattened tubular packaging material (T) in pressure contact with each other, a not-shown ultrasonic oscillator is actuated to fusion-bond the inner surfaces of the pressure-contacted two portions of the flattened tubular packaging material (T) to each other, and to fusion-bond the sealing tape (S) to the inner surface of a portion of the tubular packaging material (T), located at a position opposite to the overlapping portion. Both edges of the sealing tape (S) are also fusion-bonded to the inner surface of that portion of the tubular packaging material (T), whereby excellent sealing properties can be obtained.

The tubular packaging material (T) is triple-layered in the overlapping portion (T1) and double-layered in the other portion (T2). Thus, the overlapping portion (T1) is thicker than the other portion (T2). Accordingly, an inner step and an outer step are formed between the overlapping portion (T1) and the other portion (T2) of the tubular packaging material (T). Due to these steps, the distribution of the pressing force applied by the sealing surfaces (171), (172) of the ultrasonic horn (17A) and the anvil (17B) is non-uniform, which may result in poor sealing.

In order to make the distribution of the pressing force upon lateral sealing uniform and to thereby prevent poor sealing, a lateral sealing device has been proposed which has an absorption portion, formed e.g. in the sealing surface (172) of the anvil (17B), for absorbing the steps (T11), (T12) formed between the overlapping portion (T1) and the other portion (T2) of the tubular packaging material (T) (see the below-listed patent document 1).

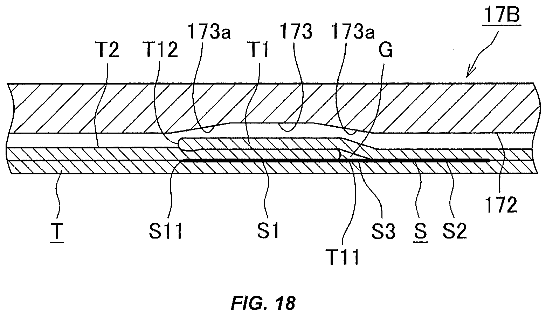

As shown in FIG. 18, the absorption portion of the lateral sealing device is comprised of, for example, a recessed groove (173) having an isosceles trapezoidal cross-sectional shape and formed across the sealing surface (172) and in the center of the sealing surface (172) in the length direction. The recessed groove (173) is designed such that the inner step (T11) and the outer step (T12) of the overlapping portion (T1) of the tubular packaging material (T) are to be positioned on the inclined surfaces (173a) of the groove (173).
Additional filling packaging machines or aspects of such machines are known for example from JP 2008 137 702 A, US 2018/186087 A1, US 2018/222617 A1, JP 2008 143523 A and JP 2008 207830 A.

### Citation List

### Patent Literature

Patent Document 1: Japanese Patent Laid-Open Publication No. 2001-18924

### Summary of Invention

### Technical Problem

However, when locally pinching the tubular packaging material (T) with the sealing surfaces (171), (172) of the ultrasonic horn (17A) and the anvil (17B), the tubular packaging material (T) can sometimes rotate from an appropriate position or be displaced in the length direction of the sealing surfaces (171), (172). Consequently, the inner step (T11) and the outer step (T12) of the overlapping portion (T1) cannot be accurately positioned on the inclined surfaces (173a) of the recessed groove (173), resulting in a failure to press the steps (T11), (T12) at an optimal pressure.

As a result, in the laterally sealed portion, a first edge (S11) of both edges of the sealing tape (S), which is located on the overlapping portion side (hereinafter sometimes referred to as "SA side") of the sealing tape (S) when viewed from the inner step (T11) of the overlapping portion (T1), may not be fusion-bonded to the inner surface of the tubular packaging material (T), or a hollow space may be formed between the first edge (S11) and the inner surface of the tubular packaging material (T). When there is such a non-bonded portion or a hollow space in the laterally sealed portion, there is a fear of leakage of contents or the entry of bacteria from the outside especially in the manufacturing of an aseptic product that needs sterilization of the packaging material e.g. with a hydrogen peroxide solution.

The present invention has been made in view of the above problems. It is therefore an object of the present invention to provide a filling packaging machine which does not cause poor sealing between a sealing tape and the inner surface of a tubular packaging material in a laterally sealed portion as formed by ultrasonic sealing. It is also an object of the present invention to provide a content filling container in which such poor sealing has been effectively prevented and which has enhanced sealing properties, and to provide a manufacturing method therefor.

### Solution to Problem

The present inventors, through intensive studies of the cause of poor sealing in a lateral sealing portion as formed by ultrasonic sealing, have found that in the case where a first edge of a sealing tape, which is the overlapping portion-side one of both edges of the sealing tape, is disposed such that it aligns with an outer step of an overlapping portion of a tubular packaging material when viewed in the thickness direction of the tubular packaging material, if the inner and outer steps of the overlapping portion are each displaced from an appropriate position on an absorption portion (recessed groove) provided in the sealing surface of e.g. an anvil, the step portions cannot be pressed at an optimal pressure, which is likely to cause poor sealing. The present invention has been accomplished based on this finding.

Thus, in order to achieve the above objects, the present invention provides the following:
1) A filling packaging machine comprising:
   a tape attachment device for attaching a sealing tape to one end of one surface of a web-like packaging material such that the sealing tape partly protrudes outside the packaging material in the width direction;
   a vertical sealing device for vertically sealing both ends of the web-like packaging material such that they overlap with each other by a predetermined width to form a tubular packaging material and to attach a protruding portion of the sealing tape to an inner surface of the tubular packaging material so that it can cover an inner step of the overlapping portion; and
   a lateral sealing device for laterally sealing the tubular packaging material, filled with contents, at an interval corresponding to the length of one container, the lateral sealing device including an ultrasonic horn and an anvil which are openably/closably provided on opposite sides of the tubular packaging material, and have sealing surfaces facing each other and extending in a direction perpendicular to the length direction of the tubular packaging material, and having an absorption portion, formed in the sealing surface of one of the ultrasonic horn and the anvil, for absorbing steps formed between the overlapping portion and the other portion,
   wherein the tape attachment device attaches a predetermined-width portion of the sealing tape to the one end of the one surface of the web-like packaging material in such a manner that a first edge of both edges of the sealing tape, which is to be located on an overlapping portion side of the sealing tape when viewed from the inner step of the overlapping portion, will be disposed at a position displaced from an outer step of the overlapping portion when viewed in the thickness direction of the tubular packaging material.

Also the filling packaging machine as described in 1) above, wherein the tape attachment device attaches a predetermined-width portion of the sealing tape to the one end of the one surface of the web-like packaging material in such a manner that the first edge of the sealing tape will be disposed at a position which is displaced by not less than 0.5 mm from the outer step of the overlapping portion in a direction away from the inner step of the overlapping portion. The filling packaging machine as described in 1) above, wherein the tape attachment device attaches a predetermined-width portion of the sealing tape to the one end of the one surface of the web-like packaging material in such a manner that the first edge of the sealing tape will be disposed at a position which is displaced by 0.5 to 3 mm from the outer step of the overlapping portion in a direction toward the inner step of the overlapping portion.

According to an advantageous variant, the sealing tape has a width which is 1 to 10 times the width of the overlapping portion.

Another variant provides pressing protrusions, wherein one is for pressing the first edge of the sealing tape and a portion of the tubular packaging material which overlaps the first edge, and the other for pressing a second edge of the sealing tape opposite from the first edge and a portion of the tubular packaging material which overlaps the second edge, are formed at the corresponding positions on the sealing surface of one of the ultrasonic horn and the anvil. Each pressing protrusion can have a ridge-like shape extending in the length direction of the sealing surface and having a length of 1 to 5 mm, a thickness of 0.1 to 0.6 mm, and a protruding height of 0.1 to 0.5 mm.

Another aspect of the invention concerns a manufacturing method for a content filling container as defined by claims 6 or 7. The method comprising:
a tape attachment step for attaching a sealing tape to one end of one surface of a web-like packaging material such that the sealing tape partly protrudes outside the packaging material in the width direction;
a vertical sealing step for vertically sealing both ends of the web-like packaging material such that they overlap with each other by a predetermined width to form a tubular packaging material and to attach a protruding portion of the sealing tape to an inner surface of the tubular packaging material so that it can cover an inner step of the overlapping portion; and
a lateral sealing step for laterally sealing the tubular packaging material, filled with contents, at an interval corresponding to the length of one container by using a lateral sealing device including an ultrasonic horn and an anvil which are openably/closably provided on opposite sides of the tubular packaging material, and have sealing surfaces facing each other and extending in a direction perpendicular to the length direction of the tubular packaging material, and having an absorption portion, formed in the sealing surface of one of the ultrasonic horn and the anvil, for absorbing steps formed between the overlapping portion and the other portion,
wherein in the tape attachment step, a predetermined-width portion of the sealing tape is attached to the one end of the one surface of the web-like packaging material in such a manner that the a first edge of both edges of the sealing tape, which is to be located on an overlapping portion side of the sealing tape when viewed from the inner step of the overlapping portion, will be disposed at a position displaced from an outer step of the overlapping portion when viewed in the thickness direction of the tubular packaging material.

The manufacturing method for a content filling container as described above, wherein in the tape attachment step, a predetermined-width portion of the sealing tape is attached to the one end of the one surface of the web-like packaging material in such a manner that the first edge of the sealing tape will be disposed at a position which is displaced by not less than 0.5 mm from the outer step of the overlapping portion in a direction away from the inner step of the overlapping portion.

Alternatively in the tape attachment step, a predetermined-width portion of the sealing tape is attached to the one end of the one surface of the web-like packaging material in such a manner that the first edge of the sealing tape will be disposed at a position which is displaced by 0.5 to 3 mm from the outer step of the overlapping portion in a direction toward the inner step of the overlapping portion.

The manufacturing method for a content filling container as described can have an additional variant, wherein the sealing tape of this variant has a width which is 1 to 10 times the width of the overlapping portion.

The manufacturing method for a content filling container as described above, wherein - according to an additional embodiment - in the lateral sealing step, the first edge of the sealing tape and a portion of the tubular packaging material which overlaps the first edge, and a second edge of the sealing tape opposite from the first edge and a portion of the tubular packaging material which overlaps the second edge, are pressed by pressing protrusions formed at the corresponding positions on the sealing surface of one of the ultrasonic horn and the anvil.

The manufacturing method for a content filling container as described above, wherein - according to an additional embodiment - each pressing protrusion has a ridge-like shape extending in the length direction of the sealing surface and having a length of 1 to 5 mm, a thickness of 0.1 to 0.6 mm, and a protruding height of 0.1 to 0.5 mm.

A further aspect of the invention concerns a content filling container manufactured by using the filling packaging machine as described above.

An additional aspect of the invention concerns a content filling container manufactured by the method as described above.

### Advantageous Effects of Invention

According to the filling packaging machine as described in claims 1 and 2 , the manufacturing method for the content filling container as described in claims 6 and 7 , and the content filling container as described in claims 11 and 12 , the first edge of both edges of the sealing tape, which is located on the overlapping portion side when viewed from the inner step of the overlapping portion, is disposed at a position displaced from the outer step of the overlapping portion when viewed in the thickness direction of the tubular packaging material. This makes it possible to prevent the occurrence of the poor sealing problems, such as a failure in fusion-bonding of the first edge of the sealing tape to the inner surface of the tubular packaging material and the formation of a hollow space between the first edge of the sealing tape and the inner surface of the tubular packaging material, and to thereby enhance the sealing properties of the laterally sealed portion even when the inner and outer steps of the overlapping portion are each displaced from an appropriate position on the absorption portion, formed in the sealing surface of the ultrasonic horn or the anvil, upon lateral sealing.

The filling packaging machine as described in any one of of the claims 3 to 5 , and the manufacturing method for the content filling container as described in any one of the claims 8 to 10 can more securely achieve the effect of preventing the occurrence of poor sealing problems in the laterally sealed portion.

### Brief Description of the Drawing

FIG. 1 is a perspective view schematically showing a lateral sealing device of a filling packaging machine according to a first embodiment of the present invention.
FIG. 2 is a front view showing an anvil of the lateral sealing device.
FIG. 3 is an enlarged front view of the anvil, showing a central portion in the length direction.
FIG. 4 is an enlarged cross-sectional view of the lateral sealing device on line IV-IV of FIG. 2.
FIG. 5 is an enlarged cross-sectional view of the lateral sealing device on line V-V of FIG. 2.
FIG. 6 is an enlarged cross-sectional view showing a first mode of the positional relationship between an overlapping portion of a tubular packaging material, a sealing tape, and an absorption portion (recessed groove) in a sealing surface of an anvil upon lateral sealing.
FIG. 7 is an enlarged cross-sectional view showing a second mode of the positional relationship.
FIG. 8 is an enlarged cross-sectional view showing a third mode of the positional relationship.
FIG. 9 shows a lateral sealing device of a filling packaging machine according to a second embodiment of the present invention, and is an enlarged front view of an anvil of the lateral sealing device, showing a central portion in the length direction.
FIG. 10 is an enlarged cross-sectional view of a second embodiment of the lateral sealing device analogous to FIG. 5.
FIG. 11 is an enlarged cross-sectional view showing a first mode of the positional relationship between an overlapping portion of a tubular packaging material, a sealing tape, an absorption portion (recessed groove) in a sealing surface of an anvil, and pressing protrusions upon lateral sealing.
FIG. 12 is an enlarged cross-sectional view showing a second mode of the positional relationship.
FIG. 13 is an enlarged cross-sectional view showing a third mode of the positional relationship.
FIG. 14 shows enlarged views illustrating the shape and dimensions of a pressing protrusion, FIG. 14(a) being a front view, FIG. 14(b) a side view, and FIG. 15(c) a cross-sectional view.
FIG. 15 shows variations in the shape of a pressing protrusion, FIGS. 15(a-1) through 15(a-4) being front views, FIGS. 15(b-1) through 15(b-5) side views, and FIGS. 15(c-1) through 15(c-4) cross-sectional views.
FIG. 16 is a perspective view schematically showing the overall construction of a conventional filling packaging machine.
FIGS. 17(a) and 17(b) are cross-sectional views schematically illustrating a lateral sealing step performed by a lateral sealing device of the conventional filling packaging machine.
FIG. 18 is an enlarged cross-sectional view showing the positional relationship between an overlapping portion of a tubular packaging material, a sealing tape, and an absorption portion (recessed groove) in a sealing surface of an anvil upon lateral sealing performed by the lateral sealing device.

### Description of Embodiments

Embodiments of the present invention will now be described with reference to the drawings.

### [First Embodiment]

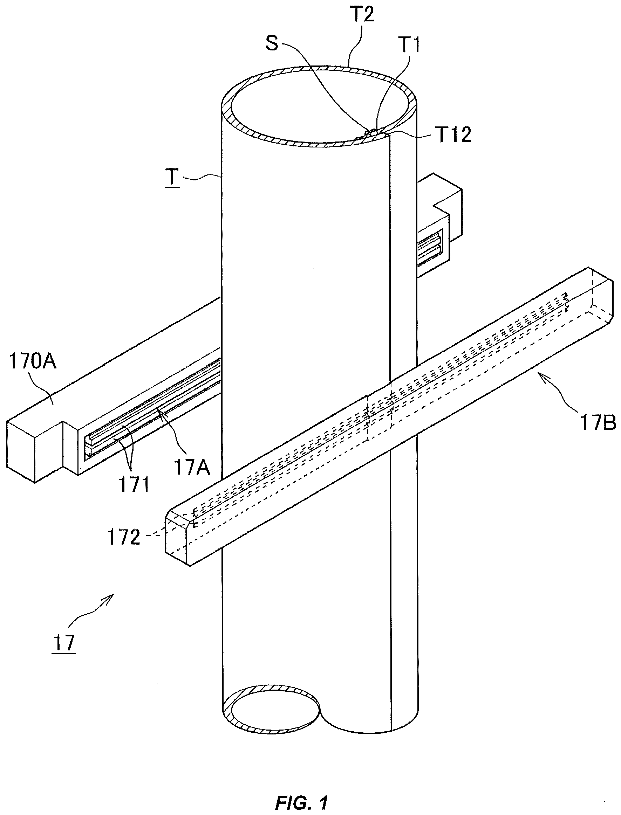

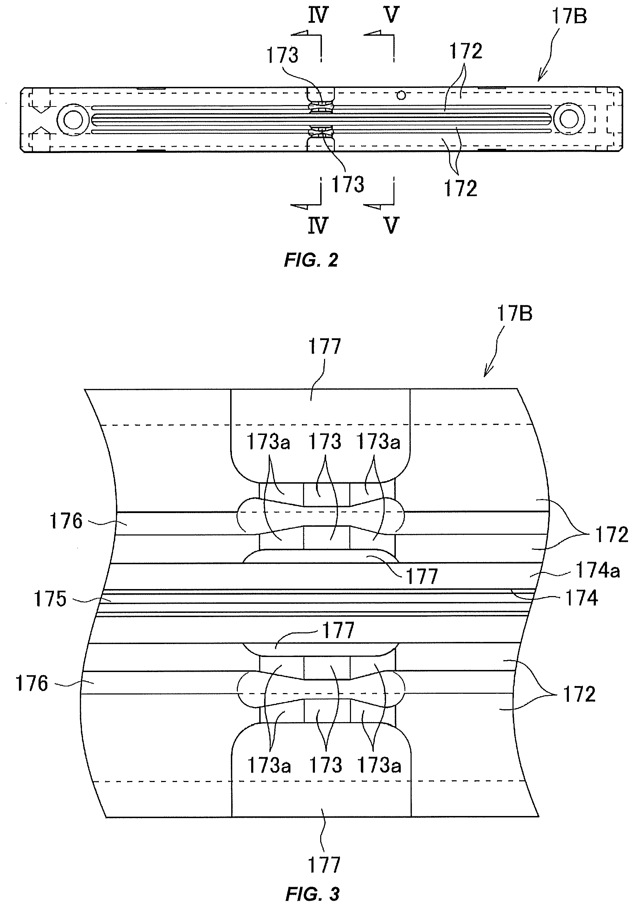

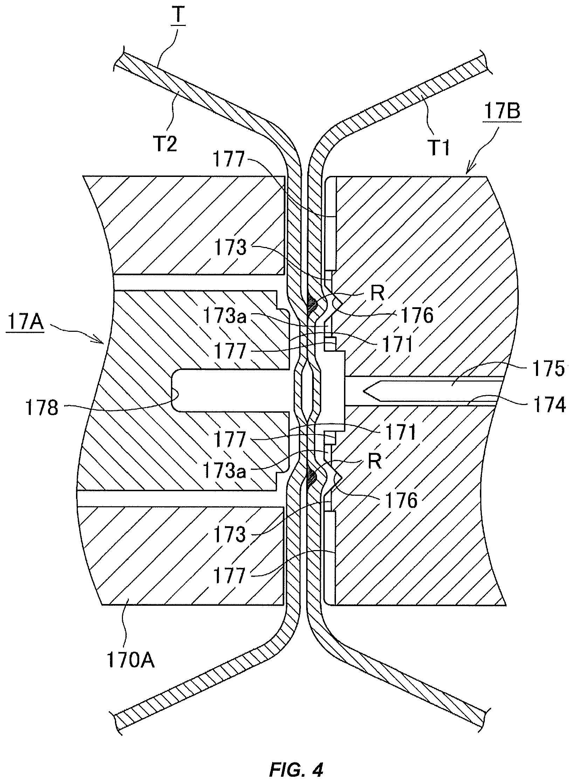

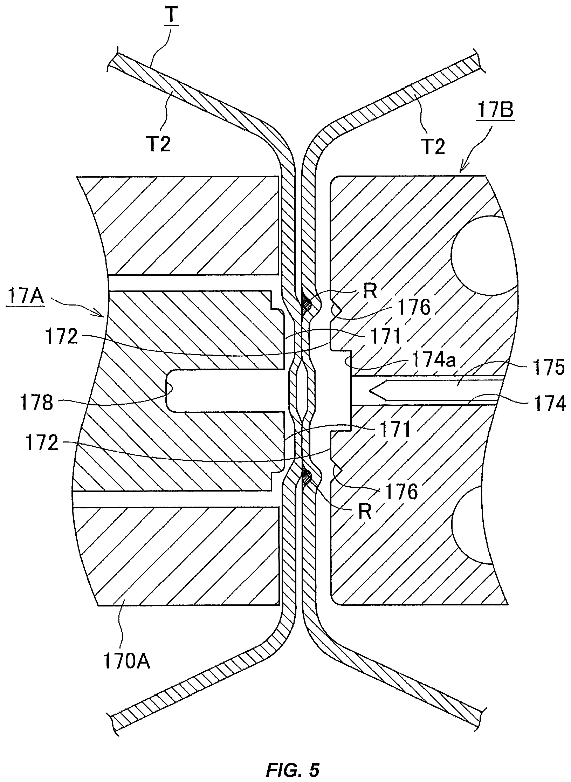

FIG. 1 schematically shows a lateral sealing device of a filling packaging machine according to a first embodiment of the present invention, and FIGS. 2 through 5 show details of the lateral sealing device. Two overlaps in an overlapping portion (T1) of a tubular packaging material (T) and a sealing tape (S) are omitted from FIG. 4. Except for the below-described detailed structure of the lateral sealing device, the filling packaging machine has substantially the same structure as the conventional apparatus described above with reference to FIGS. 16 and 17, and therefore a duplicate description thereof is omitted.

As shown in FIG. 1, an ultrasonic horn (17A) and an anvil (17B) of the lateral sealing device are comprised of metal bars extending in a direction perpendicular to the length direction of a tubular packaging material (T) and facing each other with the tubular packaging material (T) interposed between them.

The ultrasonic horn (17A) has, in the inner surface facing the tubular packaging material (T), two upper and lower zonal sealing surfaces (171) extending parallel to each other in the length direction. A cutter escape groove (178) is formed between the two sealing surfaces (171).

The ultrasonic horn (17A) is housed in a stopper (170A), which is comprised of a hollow bar having an opening in the inner surface facing the tubular packaging material (T), such that the sealing surfaces (171) protrude slightly from the opening. Though not shown diagrammatically in detail, the ultrasonic horn (17A) is configured to be vibrated with a predetermined amplitude by a vibrational energy that has been generated by an ultrasonic oscillator, amplified or reduced by a converter, and transmitted to the ultrasonic horn (17A).

As shown in FIGS. 2 through 5, the anvil (17B) has, in the inner surface facing the tubular packaging material (T), two upper and lower zonal sealing surfaces (172) extending parallel to each other in the length direction and facing the two sealing surfaces (171) of the ultrasonic horn (17A). A cutter (175) for cutting a laterally sealed portion at an intermediate position in the width direction is retractably housed in a slit (174) formed between the two sealing surfaces (172). A step (174a) facing the ultrasonic horn (17A) is formed at the upper and lower ends of the opening of the slit (174). A horizontal groove (176), having a V-shaped cross-sectional shape and extending in the length direction of the sealing surfaces (172), is formed in each of the upper and lower sealing surfaces (172) at an intermediate position in the width direction such that it vertically divides the sealing surface (172) . The horizontal grooves (176) are provided to form resin pools (R) at positions adjacent to the inner surfaces of the two portions of the flattened tubular packaging material (T) which are to be fusion-bonded to each other by lateral sealing. A molten thermoplastic resin, which forms a sealant layer within the tubular packaging material (T), is partly extruded into the grooves (176) to form the resin pools (R). The resin pools (R) make it possible to provide a laterally sealed portion having excellent sealing properties, and to cut the laterally sealed portion with the cutter (175) without any problem.

An absorption portion (173) for absorbing steps (T11), (T12) formed between the overlapping portion (T1) and the other portion (T2) of the tubular packaging material (T) is formed in the center of each sealing surface (172) in the length direction. The absorption portion (173) is comprised of a recessed groove (173) having an isosceles trapezoidal cross-sectional shape and extending in a direction perpendicular to the length direction of the sealing surfaces (172). Upon lateral sealing, the inner step (T11) and the outer step (T12) (i.e. the end surfaces of the packaging material which form the steps) of the overlapping portion (T1) of the tubular packaging material (T) are to be positioned on inclined surfaces (173a) of the recessed groove (173). The recessed groove (173) of each sealing surface (172) is vertically divided by the horizontal groove (176) having a V-shaped cross-sectional shape. Recesses (177), which are slightly deeper than each recessed groove (173), are formed on both vertical sides of each recessed groove (173). The shape of the absorption portion is not limited to that of the illustrated shape. For example, the absorption portion may be comprised of a recessed groove having a concave cross-sectional shape or a raised/recessed portion having a corrugated cross-sectional shape. The absorption portion may be formed in each sealing surface of the ultrasonic horn.

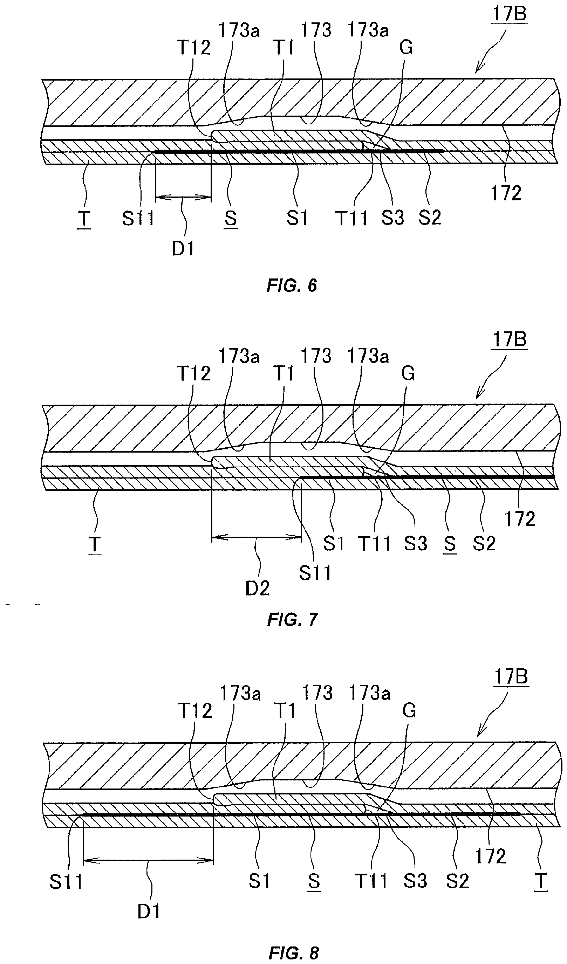

FIGS. 6 through 8 show three modes of the positional relationship between the overlapping portion (T1) of the tubular packaging material (T), the sealing tape (S), and the absorption portion (recessed groove) (173) in the sealing surface (172) of the anvil (17B) upon lateral sealing.

For the overlapping portion (T1), an appropriate width is set according to the size of a container to be manufactured. The sealing tape (S) generally has a width which is approximately equal to "the width of the overlapping portion (T1) × 2". In an example, the width of the overlapping portion (T1) is 3.8 mm, and the width of the sealing tape (S) is 7.5 mm. In conventional practice, the width of the SA-side portion (S1) of the sealing tape (S), which has been first attached to one surface of a web-like packaging material (W) in a tape attachment process and is located beside the overlapping portion (T1), is set to be approximately equal to the width of the LS-side portion (S2) of the sealing tape (S), which has been attached to the inner surface of the tubular packaging material (T) in a vertical sealing step and is located on the opposite side of the inner step (T11) of the overlapping portion (T1) from the overlapping portion (T1). Specifically, when the overall width of the sealing tape (S) is 7.5 mm, the width of the SA-side portion (S1) of the sealing tape (S) and the width of the LS-side portion (S2) are each about 3.45 mm, which is one-half of a value obtained by subtracting the width of a portion (S3) facing an air gap (G) that lies adjacent to the inner step (T11) of the overlapping portion (T1), which is about 0.6 mm, from 7.5 mm (see FIG. 18). In conventional practice, therefore, the first edge (S11) of the sealing tape (S) is disposed such that it approximately aligns with the outer step (T12) of the overlapping portion (T1) when viewed in the thickness direction of the tubular packaging material (T), as shown in FIG. 18.

In contrast, in the first embodiment of the present invention, the first edge (S11) (the left edge in the figures) of both edges of the sealing tape (S), which is located on the overlapping portion side (SA side) of the sealing tape (S) when viewed from the inner step (T11) of the overlapping portion (T1), is disposed at a position displaced from the outer step (T12) of the overlapping portion (T1) when viewed in the thickness direction of the tubular packaging material (T), as shown in FIGS. 6 through 8.

Such a position of the sealing tape (S) can be ensured by changing and adjusting the width of the SA-side portion (S1) of the sealing tape (S) which is attached to one end of one surface of the web-like packaging material (W) in a tape attachment step performed by a tape attachment device (13). Though not shown diagrammatically in detail, the tape attachment device (13) is configured to be movable in a direction perpendicular to the sealing tape (S) feed direction so as to adjust the lateral position of the sealing tape (S), and therefore can arbitrarily change and adjust the relative position in the width direction between the sealing tape (S) and the tubular packaging material (T) in the tape attachment step.

The three modes of the positional relationship will now be described in greater detail. In the first mode, as shown in FIG. 6, the first edge (S11) of the sealing tape (S) is disposed at a position which is displaced by a distance (D1) of not less than 0.5 mm, preferably not less than 1 mm from the outer step (T12) of the overlapping portion (T1) in a direction away from the inner step (T11) of the overlapping portion (T1).

In this case, the sealing tape (S), like the conventional one, has a width which is approximately twice the width of the overlapping portion (T1).

By thus displacing the first edge (S11) of the sealing tape (S) by a distance (D1) of not less than 0.5 mm, preferably not less than 1 mm from the outer step (T12) of the overlapping portion (T1) in a direction opposite from the inner step (T11) of the overlapping portion (T1), the poor sealing problems, such as a failure in fusion-bonding of the SA-side first edge (S11) of the sealing tape (S) to the inner surface of the tubular packaging material (T) and the formation of a hollow space between the first edge (S11) and the inner surface of the tubular packaging material (T), can be effectively prevented even when the inner step (T11) and the outer step (T12) of the overlapping portion (T1) are positioned off the inclined surfaces (173a) of the recessed groove (absorption portion) (173) in the sealing surface (172) of the anvil (17B) upon lateral sealing.

In the second mode, as shown in FIG. 7, the first edge (S11) of the sealing tape (S) is disposed at a position which is displaced by a distance (D2) of 0.5 to 3 mm, preferably 1.5 to 3 mm from the outer step (T12) of the overlapping portion (T1) in a direction toward the inner step (T11) of the overlapping portion (T1).

Also in this case, the sealing tape (S), like the conventional one, has a width which is approximately twice the width of the overlapping portion (T1).

Also in the second mode, poor sealing can be effectively prevented even when the inner step (T11) and the outer step (T12) of the overlapping portion (T1) are positioned off the inclined surfaces (173a) of the recessed groove (absorption portion) (173) in the sealing surface (172) of the anvil (17B) upon lateral sealing.

In the third mode, as shown in FIG. 8, the sealing tape (S) has an increased width. In an example, specifically, the width of the overlapping portion (T1) is 4 mm, and the width of the sealing tape (S) is 11 mm which is approximately three times the width of the overlapping portion (T1).

Therefore, the first edge (S11) of the sealing tape (S) can be disposed at a position which is displaced by a sufficient distance (D1) (e.g., about 3 mm) from the outer step (T12) of the overlapping portion (T1) in a direction away from the inner step (T11) of the overlapping portion (T1) .

Therefore, also in the third mode, poor sealing can be more securely prevented even when the inner step (T11) and the outer step (T12) of the overlapping portion (T1) are positioned off the inclined surfaces (173a) of the recessed groove (absorption portion) (173) in the sealing surface (172) of the anvil (17B) upon lateral sealing.

Though not shown diagrammatically in detail, besides the above-described three modes, it is possible to use a mode in which the width of the sealing tape (S) is made narrower than normal. In that case, as with the mode illustrated in FIG. 7, the first edge (S11) of the sealing tape (S) is generally disposed at a position which is displaced from the outer step (T12) of the overlapping portion (T1) in a direction toward the inner step (T11) of the overlapping portion (T1). In this mode, when the width of the sealing tape (S) is narrower than the width of the overlapping portion (T1), the too small sealing area may result in a deterioration of sealing properties.

On the other hand, in some cases, the sealing tape (S) may have a larger width than that used in the above-described three modes which, as described above, is about two to three times the width of the overlapping portion (T1). The use of the sealing tape (S) having such a large width can achieve the following effect in addition to the above-described effect of preventing poor sealing: When the sealing tape (S) is used in a container having an opening, which is openable e.g. with a pull-tab, provided in the ceiling, the sealing tape (S) can take the place of an inner tape for covering the inner surface of the opening. Thus, the use of an inner tape can be eliminated. However, when the width of the sealing tape (S) exceeds 10 times the width of the overlapping portion (T1), the sealing tape (S) can reach a crease of a container.

In view of the above, it is preferred to use a sealing tape (S) having a width which is 1 to 10 times the width of the overlapping portion (T1).

### [Second Embodiment]

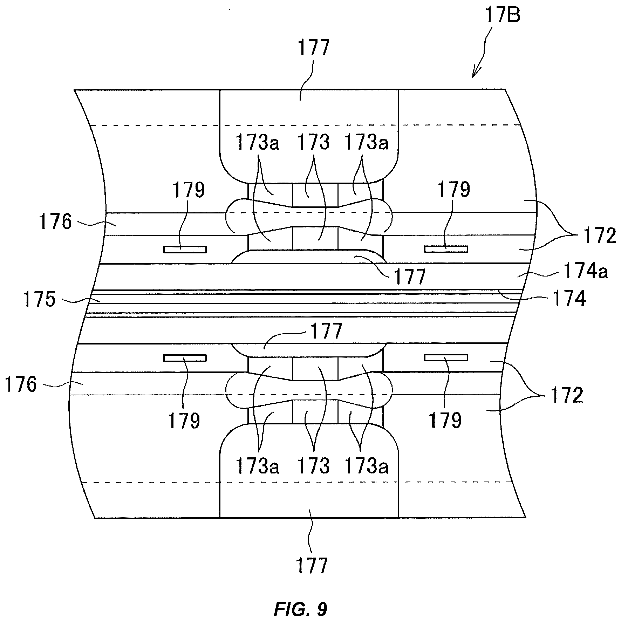

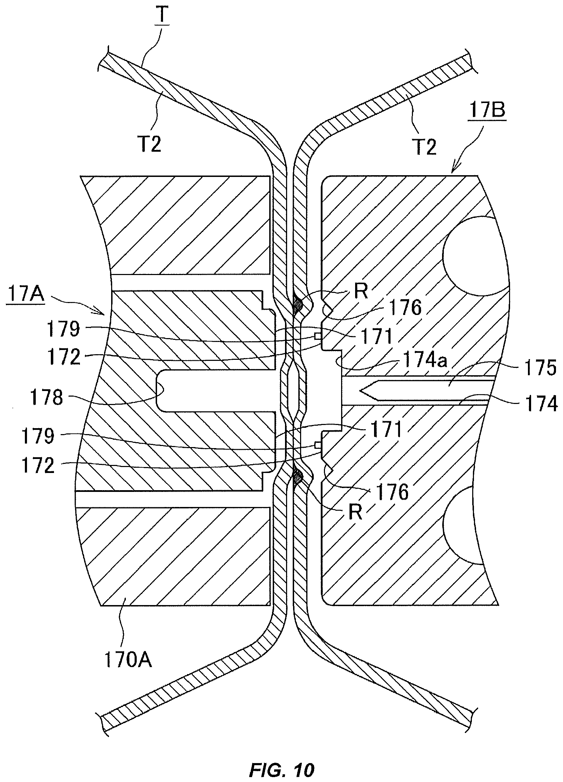

FIGS. 9 through 15 show details of a lateral sealing device of a filling packaging machine according to a second embodiment of the present invention. The lateral sealing device of the second embodiment is substantially the same as the lateral sealing device of the first embodiment shown in FIGS. 1 through 8 except for the following construction.

Thus, in the lateral sealing device of this embodiment, the sealing surfaces (172) of the anvil (17B) each have two pressing protrusions (179), one is for pressing the first edge (S11) of the sealing tape (S) and a portion of the tubular packaging material (T) which overlaps the first edge (S11), and the other for pressing a second edge (S12) of the sealing tape (S) opposite from the first edge (S11) and a portion of the tubular packaging material (T) which overlaps the second edge (S12). The two pressing protrusions (179) are formed at the corresponding positions on each of the sealing surfaces (172) of the anvil (17B). In particular, two left and right pressing protrusions (179) are formed at positions below the horizontal groove (176) in the upper sealing surface (172) of the anvil (17B), and two left and right pressing protrusions (179) are formed at positions above the horizontal groove (176) in the lower sealing surface (172) of the anvil (17B).

The lateral sealing device described above enables more secure sealing between the first and second edges (S11), (S12) of the sealing tape (S) and the inner surface of the tubular packaging material (T), and can therefore more effectively prevent the occurrence of leakage of contents due to poor sealing in such portions.

Though not shown diagrammatically, pressing protrusions may be formed on the sealing surfaces (171) of the ultrasonic horn (17A).

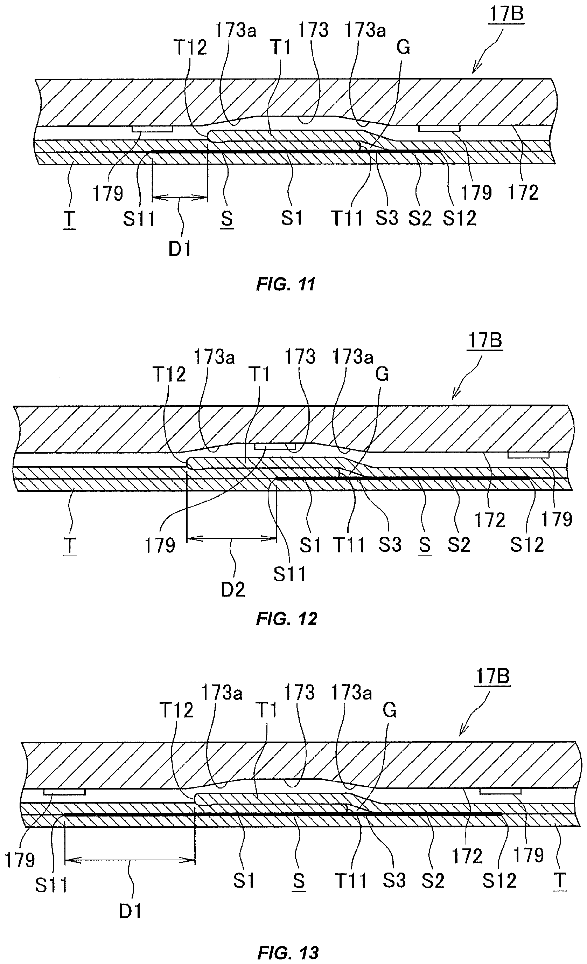

FIGS. 11 through 13 show in detail positions where the pressing protrusions (179) are formed in the three modes of the positional relationship between the overlapping portion (T1) of the tubular packaging material (T), the sealing tape (S), and the absorption portion (recessed groove) (173) in the sealing surface (172) of the anvil (17B) upon lateral sealing, shown in FIGS. 6 through 8.

In the case where the first edge (S11) of the sealing tape (S) is disposed at a position which is displaced by a predetermined distance (D1) from the outer step (T12) of the overlapping portion (T1) in a direction away from the inner step (T11) of the overlapping portion (T1) (the mode illustrated in FIG. 6), the pressing protrusions (179) are formed at positions on both sides of and adjacent to the recessed groove (absorption portion) (173) in each of the upper and lower sealing surfaces (172), as shown in FIG. 11.

In the case where the first edge (511) of the sealing tape (S) is disposed at a position which is displaced by a predetermined distance (D2) from the outer step (T12) of the overlapping portion (T1) in a direction toward the inner step (T11) of the overlapping portion (T1) (the mode illustrated in FIG. 7), the pressing protrusions (179) are formed in the center of the bottom of the recessed groove (absorption portion) (173) in each of the upper and lower sealing surfaces (172), and at a position on the right of and at a considerable distance from the recessed groove (absorption portion) (173), as shown in FIG. 12. The position of the pressing protrusion (179) corresponding to the first edge (S11) of the sealing tape (S) may be laterally displaced from the center of the bottom of the recessed groove (absorption portion) (173) depending on the attachment position of the sealing tape (S).

In the case where the sealing tape (S) has a wide width, and therefore the first edge (S11) of the sealing tape (S) is disposed at a position which is displaced by a sufficient distance (D1) from the outer step (T12) of the overlapping portion (T1) in a direction away from the inner step (T11) of the overlapping portion (T1) (the mode illustrated in FIG. 8), the pressing protrusions (179) are formed at positions on both sides of and at a considerable distance from the recessed groove (absorption portion) (173) in each of the upper and lower sealing surfaces (172), as shown in FIG. 13.

Though not shown diagrammatically, when a sealing tape having a smaller width than the sealing tape (S) having a normal width (see FIGS. 11 and 12) is used, the pressing protrusions are formed on the bottom of the recessed groove (absorption portion) (173) in each of the upper and lower sealing surfaces (172), and at a position on the right of and adjacent to the recessed groove (absorption portion) (173) .

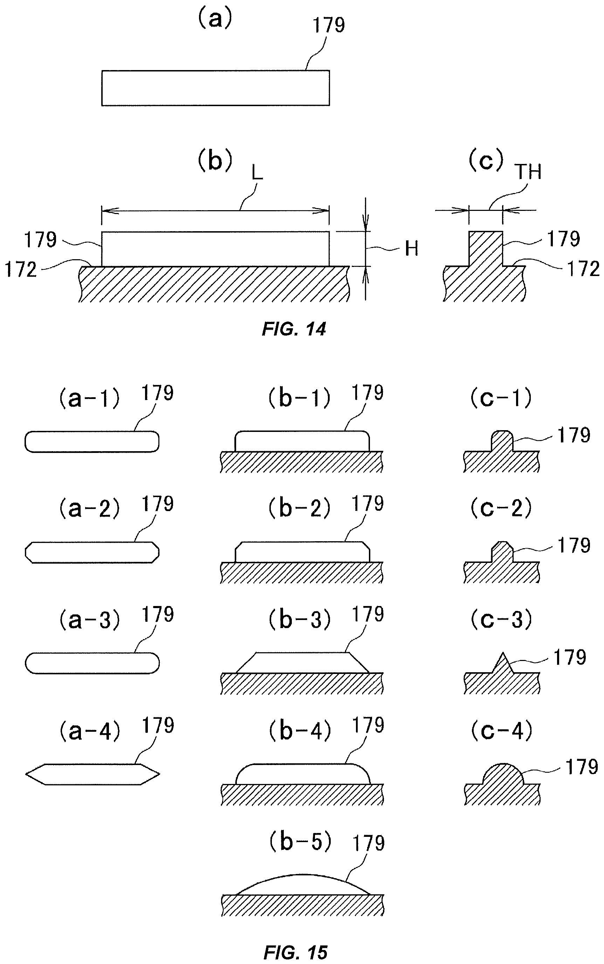

As shown in detail in FIG. 14, each pressing protrusion (179) has a ridge-like shape extending in the length direction of the sealing surface (172).

Each pressing protrusion (179) preferably has the following dimensions: a length (L) of 1 to 5 mm; a thickness (TH) of 0.1 to 0.6 mm; and a protruding height (H) of 0.1 to 0.5 mm.

If the length (L) of each pressing protrusion (179) is less than 1 mm, there is a fear that the pressing protrusions (179) cannot securely press the both edges (S11), (S12) of the sealing tape (S) and those portions of the tubular packaging material (T) which overlap the edges (S11), (S12) when the position of the tubular packaging material (T) and the sealing tape (S) is displaced upon lateral sealing. If the length (L) exceeds 5 mm, on the other hand, there is a fear that the pressing protrusions (179) may also press portions other than the intended portions.

If the thickness (TH) of each pressing protrusion (179) is less than 0.1 mm, it may quickly wear out. If the thickness (TH) exceeds 0.6 mm, on the other hand, the difference between the thickness (TH) and the width of the sealing surface (172) is small, which may result in a failure to fully achieve the above effect.

If the protruding height (H) of each pressing protrusion (179) is less than 0.1 mm, there is a fear that the above effect cannot be securely achieved. If the protruding height (H) exceeds 0.5 mm, on the other hand, there is a fear of burning or cutting of the tubular packaging material (T) upon lateral sealing.

Each pressing protrusion (179) may be rectangular in a front view, rectangular in a side view, and square in a cross-sectional view, as shown in FIG. 14, or may have a shape which is an arbitrary combination of a front shape, a side shape and a cross-sectional shape as shown in FIG. 15.

In particular, the front shape of each pressing protrusion (179) may be a generally rectangular shape with arcuate corners, a generally rectangular shape with chamfered corners, a race-track shape with semicircular short sides, or an elongated hexagonal shape with V-shaped short sides, as sequentially shown in FIGS. 15(a-1) through 15(a-4).

The side shape of each pressing protrusion (179) may be a generally rectangular shape with arcuate front-end corners, a generally rectangular shape with chamfered front-end corners, an elongated isosceles trapezoidal shape, a generally elongated isosceles trapezoidal shape with arcuate short sides, or a domical shape, as sequentially shown in FIGS. 15(b-1) through 15(b-5).

The cross-sectional shape of each pressing protrusion (179) may be a generally square shape with arcuate front-end corners, a generally square shape with chamfered front-end corners, a triangular shape, or a semicircular shape, as sequentially shown in FIGS. 15(c-1) through 15(c-4).

### Industrial Applicability

The present invention can be advantageously applied in a filling packaging machine for filling and packaging contents, such as a fluid food or a beverage, into a container formed of a web-like packaging material composed of e.g. paper, in a content filling container, and in a manufacturing method for the content filling container.

### Description of the Symbols

(10): filling packaging machine
(13): tape attachment device
(15): vertical sealing device
(17): lateral sealing device
(17A): ultrasonic horn
(171): sealing surface (of ultrasonic horn)
(17B): anvil
(172): sealing surface (of anvil)
(173): recessed groove (absorption portion)
(173a): inclined surface
(179): pressing protrusion
(W): web-like packaging material
(T): tubular packaging material
(T1): overlapping portion
(T11): inner step
(T12): outer step
(S): sealing tape
(S11): first edge
(S12): second edge

## Claims

1. A filling packaging machine (10) comprising:
a tape attachment device (13) for attaching a sealing tape to one end of one surface of a web-like packaging material such that the sealing tape partly protrudes outside the packaging material in the width direction;
a vertical sealing device (15) for vertically sealing both ends of the web-like packaging material such that they overlap with each other by a predetermined width to form a tubular packaging material and to attach a protruding portion of the sealing tape to an inner surface of the tubular packaging material so that it can cover an inner step of the overlapping portion; and
a lateral sealing device (17) for laterally sealing the tubular packaging material, filled with contents, at an interval corresponding to the length of one container, the lateral sealing device including an ultrasonic horn and an anvil which are openably/closably provided on opposite sides of the tubular packaging material, and have sealing surfaces facing each other and extending in a direction perpendicular to the length direction of the tubular packaging material, and having an absorption portion, formed in the sealing surface of one of the ultrasonic horn and the anvil, for absorbing steps formed between the overlapping portion (T1) and the other portion,
**characterised in that** the tape attachment device (13) attaches a predetermined-width portion of the sealing tape to the one end of the one surface of the web-like packaging material in such a manner that a first edge of both edges of the sealing tape, which is to be located on an overlapping portion side of the sealing tape when viewed from the inner step of the overlapping portion, will be disposed at a position displaced from an outer step of the overlapping portion (T1) when viewed in the thickness direction of the tubular packaging material,
wherein the tape attachment device (13) attaches a predetermined-width portion of the sealing tape to the one end of the one surface of the web-like packaging material in such a manner that the first edge of the sealing tape will be disposed at a position which is displaced by not less than 0.5 mm from the outer step of the overlapping portion in a direction away from the inner step of the overlapping portion (T1).

2. A filling packaging machine comprising:
a tape attachment device (13) for attaching a sealing tape to one end of one surface of a web-like packaging material such that the sealing tape partly protrudes outside the packaging material in the width direction;
a vertical sealing device (15) for vertically sealing both ends of the web-like packaging material such that they overlap with each other by a predetermined width to form a tubular packaging material and to attach a protruding portion of the sealing tape to an inner surface of the tubular packaging material so that it can cover an inner step of the overlapping portion; and
a lateral sealing device (17) for laterally sealing the tubular packaging material, filled with contents, at an interval corresponding to the length of one container, the lateral sealing device including an ultrasonic horn and an anvil which are openably/closably provided on opposite sides of the tubular packaging material, and have sealing surfaces facing each other and extending in a direction perpendicular to the length direction of the tubular packaging material, and having an absorption portion, formed in the sealing surface of one of the ultrasonic horn and the anvil, for absorbing steps formed between the overlapping portion and the other portion,
**characterised in that** the tape attachment device attaches a predetermined-width portion of the sealing tape to the one end of the one surface of the web-like packaging material in such a manner that a first edge of both edges of the sealing tape, which is to be located on an overlapping portion side of the sealing tape when viewed from the inner step of the overlapping portion, will be disposed at a position displaced from an outer step of the overlapping portion when viewed in the thickness direction of the tubular packaging material,
wherein the tape attachment device attaches a predetermined-width portion of the sealing tape to the one end of the one surface of the web-like packaging material in such a manner that the first edge of the sealing tape will be disposed at a position which is displaced by 0.5 to 3 mm from the outer step of the overlapping portion in a direction toward the inner step of the overlapping portion.

3. The filling packaging machine according to any one of claims 1 or 2, wherein the sealing tape (S) has a width which is 1 to 10 times the width of the overlapping portion (T1)

4. The filling packaging machine according to any one of claims 1 to 3, wherein pressing protrusions (179) one is for pressing the first edge (S11) of the sealing tape (S) and
a portion of the tubular packaging material (T) which overlaps the first edge, and
the other for pressing a second edge of the sealing tape opposite from the first edge and a portion of the tubular packaging material which overlaps the second edge, are formed at the corresponding positions on the sealing surface of one of the ultrasonic horn (17A) and the anvil (17B)

5. The filling packaging machine (10) according to claim 4, wherein each pressing protrusion (179) has a ridge-like shape extending in the length direction of the sealing surface and having a length of 1 to 5 mm, a thickness of 0.1 to 0.6 mm, and a protruding height of 0.1 to 0.5 mm.

6. A manufacturing method for a content filling container, comprising:
a tape attachment step for attaching a sealing tape (S) to one end of one surface of a web-like packaging material (W) such that the sealing tape partly protrudes outside the packaging material in the width direction;
a vertical sealing step for vertically sealing both ends of the web-like packaging material (W) such that they overlap with each other by a predeterminec width to form a tubular packaging material and to attach a protruding portion of the sealing tape to an inner surface of the tubular packaging material (T) so that it can cover an inner step of the overlapping portion (T1) and
a lateral sealing step for laterally sealing the tubular packaging material, filled with contents, at an interval corresponding to the length of one container by using a lateral sealing device including an ultrasonic horn and an anvil which are openably/closably provided on opposite sides of the tubular packaging material, and have sealing surfaces facing each other and extending in a direction perpendicular to the length direction of the tubular packaging material, and having an absorption portion, formed in the sealing surface of one of the ultrasonic horn (17A) and the anvil (17B) for absorbing steps formed between the overlapping portion and the other portion,
wherein in the tape attachment step, a predetermined-width portion of the sealing tape (S) is attached to the one end of the one surface of the web-like packaging material in such a manner that the a first edge of both edges of the sealing tape, which is to be located on an overlapping portion side of the sealing tape when viewed from the inner step of the overlapping portion, will be disposed at a position displaced from an outer step of the overlapping portion when viewed in the thickness direction of the tubular packaging material,
wherein in the tape attachment step, a predetermined-width portion of the sealing tape is attached to the one end of the one surface of the web-like packaging material in such a manner that the first edge of the sealing tape will be disposed at a position which is displaced by not less than 0.5 mm from the outer step of the overlapping portion in a direction away from the inner step of the overlapping portion (T1)

7. A manufacturing method for a content filling container, comprising:
a tape attachment step for attaching a sealing tape (S) to one end of one surface of a web-like packaging material such that the sealing tape partly protrudes outside the packaging material in the width direction;
a vertical sealing step for vertically sealing both ends of the web-like packaging material such that they overlap with each other by a predetermined width to form a tubular packaging material and to attach a protruding portion of the sealing tape to an inner surface of the tubular packaging material so that it can cover an inner step of the overlapping portion; and
a lateral sealing step for laterally sealing the tubular packaging material, filled with contents, at an interval corresponding to the length of one container by using a lateral sealing device including an ultrasonic horn and an anvil which are openably/closably provided on opposite sides of the tubular packaging material, and have sealing surfaces facing each other and extending in a direction perpendicular to the length direction of the tubular packaging material, and having an absorption portion, formed in the sealing surface of one of the ultrasonic horn and the anvil, for absorbing steps formed between the overlapping portion and the other portion,
wherein in the tape attachment step, a predetermined-width portion of the sealing tape is attached to the one end of the one surface of the web-like packaging material in such a manner that the a first edge of both edges of the sealing tape, which is to be located on an overlapping portion side of the sealing tape when viewed from the inner step of the overlapping portion, will be disposed at a position displaced from an outer step of the overlapping portion when viewed in the thickness direction of the tubular packaging material,
wherein in the tape attachment step, a predetermined-width portion of the sealing tape is attached to the one end of the one surface of the web-like packaging material in such a manner that the first edge of the sealing tape will be disposed at a position which is displaced by 0.5 to 3 mm from the outer step of the overlapping portion (T1) in a direction toward the inner step of the overlapping portion.

8. The manufacturing method for a content filling container according to any one of claims 6 or 7, wherein the sealing tape has a width which is 1 to 10 times the width of the overlapping portion (T1).

9. The manufacturing method for a content filling container according to any one of claims 6 to 8, wherein in the lateral sealing step, the first edge of the sealing tape and a portion of the tubular packaging material which overlaps the first edge, and a second edge (S12) of the sealing tape opposite from the first edge and a portion of the tubular packaging material which overlaps the second edge, are pressed by pressing protrusions formed at the corresponding positions on the sealing surface of one of the ultrasonic horn (17A) and the anvil (17B)

10. The manufacturing method for a content filling container according to claim 9, wherein each pressing protrusion (179) has a ridge-like shape extending in the length direction of the sealing surface and having a length of 1 to 5 mm, a thickness of 0.1 to 0.6 mm, and a protruding height of 0.1 to 0.5 mm.

11. A content filling container manufactured by using the filling packaging machine (10) according to any one of claims 1 to 5.

12. A content filling container manufactured by the method according to any one of claims 6 to 10.

## Patentansprüche

1. Abfüllverpackungsmaschine (10), umfassend:
eine Bandanbringungsvorrichtung (13) zum Anbringen eines Abdichtungsbands an einem Ende einer Fläche eines bahnartigen Verpackungsmaterials derart, dass das Abdichtungsband in der Breitenrichtung teilweise außerhalb des Verpackungsmaterials vorsteht;
eine vertikale Abdichtungsvorrichtung (15) zum vertikalen Abdichten beider Enden des bahnartigen Verpackungsmaterials derart, dass sie sich mit einer vorbestimmten Breite überlappen, um ein rohrförmiges Verpackungsmaterial zu bilden und einen vorstehenden Abschnitt des Abdichtungsbands an einer inneren Fläche des rohrförmigen Verpackungsmaterials anzubringen, so dass er eine innere Stufe des überlappenden Abschnitts abdecken kann; und
eine seitliche Abdichtungsvorrichtung (17) zum seitlichen Abdichten des rohrförmigen Verpackungsmaterials, das mit Inhalten befüllt ist, in einem Intervall, das der Länge eines Behälters entspricht, wobei die seitliche Abdichtungsvorrichtung eine Ultraschallsonotrode und einen Amboss beinhaltet, die öffenbar/schließbar an gegenüberliegenden Seiten des rohrförmigen Verpackungsmaterials bereitgestellt sind und Abdichtungsflächen aufweisen, die einander zugewandt sind und sich in einer Richtung senkrecht zu der Längsrichtung des rohrförmigen Verpackungsmaterial erstrecken und einen Absorptionsabschnitt aufweisen, der für Absorbtionsstufen, die zwischen dem überlappenden Abschnitt (T1) und dem anderen Abschnitt gebildet sind, in der Abdichtungsfläche von einem der Ultraschallsonotrode und des Ambosses gebildet ist,
**dadurch gekennzeichnet, dass** die Bandanbringungsvorrichtung (13) einen Abschnitt des Abdichtungsbands mit vorbestimmter Breite an dem einen Ende der einen Fläche des bahnartigen Verpackungsmaterials auf eine derartige Weise anbringt, dass, bei Betrachtung von der inneren Stufe des überlappenden Abschnitts, ein erster Rand von beiden Rändern des Abdichtungsbands, der an einer Seite des überlappenden Abschnitts des Abdichtungsbands zu positionieren ist, bei Betrachtung in der Dickerichtung des rohrförmigen Verpackungsmaterials, an einer Position angeordnet wird, die von einer äußeren Stufe des überlappenden Abschnitts (T1) versetzt ist, wobei die Bandanbringungsvorrichtung (13) einen Abschnitt des Abdichtungsbands mit vorbestimmter Breite an dem einen Ende der einen Fläche des bahnartigen Verpackungsmaterials auf eine derartige Weise anbringt, dass der erste Rand des Abdichtungsbands an einer Position angeordnet wird, die in einer Richtung weg von der inneren Stufe des überlappenden Abschnitts (T1) nicht weniger als 0,5 mm von der äußeren Stufe des überlappenden Abschnitts versetzt ist.

2. Abfüllverpackungsmaschine, umfassend:
eine Bandanbringungsvorrichtung (13) zum Anbringen eines Abdichtungsbands an einem Ende einer Fläche eines bahnartigen Verpackungsmaterials derart, dass das Abdichtungsband in der Breitenrichtung teilweise außerhalb des Verpackungsmaterials vorsteht;
eine vertikale Abdichtungsvorrichtung (15) zum vertikalen Abdichten beider Enden des bahnartigen Verpackungsmaterials derart, dass sie sich mit einer vorbestimmten Breite überlappen, um ein rohrförmiges Verpackungsmaterial zu bilden und einen vorstehenden Abschnitt des Abdichtungsbands an einer inneren Fläche des rohrförmigen Verpackungsmaterials anzubringen, so dass er eine innere Stufe des überlappenden Abschnitts abdecken kann; und
eine seitliche Abdichtungsvorrichtung (17) zum seitlichen Abdichten des rohrförmigen Verpackungsmaterials, das mit Inhalten befüllt ist, in einem Intervall, das der Länge eines Behälters entspricht, wobei die seitliche Abdichtungsvorrichtung eine Ultraschallsonotrode und einen Amboss beinhaltet, die öffenbar/schließbar an gegenüberliegenden Seiten des rohrförmigen Verpackungsmaterials bereitgestellt sind und Abdichtungsflächen aufweisen, die einander zugewandt sind und sich in einer Richtung senkrecht zu der Längsrichtung des rohrförmigen Verpackungsmaterial erstrecken und einen Absorptionsabschnitt aufweisen, der für Absorbtionsstufen, die zwischen dem überlappenden Abschnitt und dem anderen Abschnitt gebildet sind, in der Abdichtungsfläche von einem der Ultraschallsonotrode und des Ambosses gebildet ist,
**dadurch gekennzeichnet, dass** die Bandanbringungsvorrichtung einen Abschnitt des Abdichtungsbands mit vorbestimmter Breite an dem einen Ende der einen Fläche des bahnartigen Verpackungsmaterials auf eine derartige Weise anbringt, dass, bei Betrachtung von der inneren Stufe des überlappenden Abschnitts, ein erster Rand von beiden Rändern des Abdichtungsbands, der an einer Seite des überlappenden Abschnitts des Abdichtungsbands zu positionieren ist, bei Betrachtung in der Dickerichtung des rohrförmigen Verpackungsmaterials, an einer Position angeordnet wird, die von einer äußeren Stufe des überlappenden Abschnitts versetzt ist,
wobei die Bandanbringungsvorrichtung einen Abschnitt des Abdichtungsbands mit vorbestimmter Breite an dem einen Ende der einen Fläche des bahnartigen Verpackungsmaterials auf eine derartige Weise anbringt, dass der erste Rand des Abdichtungsbands an einer Position angeordnet wird, die in einer Richtung hin zu der inneren Stufe des überlappenden Abschnitts 0,5 bis 3 mm von der äußeren Stufe des überlappenden Abschnitts versetzt ist.

3. Abfüllverpackungsmaschine nach einem der Ansprüche 1 oder 2, wobei das Abdichtungsband (S) eine Breite aufweist, die das 1- bis 10-Fache der Breite des überlappenden Abschnitts (T1) beträgt.

4. Abfüllverpackungsmaschine nach einem der Ansprüche 1 bis 3, wobei an den entsprechenden Positionen an der Abdichtungsfläche von einem der Ultraschallsonotrode (17A) und des Ambosses (17B) Druckvorsprünge (179) gebildet sind, wobei einer zum Ausüben von Druck auf den ersten Rand (S11) des Abdichtungsbands (S) und
einen Abschnitt des rohrförmigen Verpackungsmaterials (T), der den ersten Rand überlappt, dient und
der andere zum Ausüben von Druck auf einen zweiten Rand des Abdichtungsbands gegenüber dem ersten Rand und einen Abschnitt des rohrförmigen Verpackungsmaterials, der den zweiten Rand überlappt, dient.

5. Abfüllverpackungsmaschine (10) nach Anspruch 4, wobei jeder Druckvorsprung (179) eine rippenartige Form aufweist, die sich in der Längsrichtung der Abdichtungsfläche erstreckt und eine Länge von 1 bis 5 mm, eine Dicke von 0,1 bis 0,6 mm und eine vorstehende Höhe von 0,1 bis 0,5 mm aufweist.

6. Herstellungsverfahren für einen Behälter zum Abfüllen von Inhalt, umfassend:
einen Bandanbringungsschritt zum Anbringen eines Abdichtungsbands (S) an einem Ende einer Fläche eines bahnartigen Verpackungsmaterials (W) derart, dass das Abdichtungsband in der Breitenrichtung teilweise außerhalb des Verpackungsmaterials vorsteht;
einen vertikalen Abdichtungsschritt zum vertikalen Abdichten beider Enden des bahnartigen Verpackungsmaterials (W)
derart, dass sie sich mit einer vorbestimmten Breite überlappen, um ein rohrförmiges Verpackungsmaterial zu bilden und einen vorstehenden Abschnitt des Abdichtungsbands an einer inneren Fläche des rohrförmigen Verpackungsmaterials (T) anzubringen,
so dass er eine innere Stufe des überlappenden Abschnitts (T1) abdecken kann, und einen seitlichen Abdichtungsschritt zum seitlichen Abdichten des rohrförmigen Verpackungsmaterials, das mit Inhalten befüllt ist, in einem Intervall, das der Länge eines Behälters entspricht, unter Verwendung einer seitlichen Abdichtungsvorrichtung, die eine Ultraschallsonotrode und einen Amboss beinhaltet, die öffenbar/schließbar an gegenüberliegenden Seiten des rohrförmigen Verpackungsmaterials bereitgestellt sind und Abdichtungsflächen aufweisen, die einander zugewandt sind und sich in einer Richtung senkrecht zu der Längsrichtung des rohrförmigen Verpackungsmaterial erstrecken und einen Absorptionsabschnitt aufweisen, der für Absorbtionsstufen, die zwischen dem überlappenden Abschnitt und dem anderen Abschnitt gebildet sind, in der Abdichtungsfläche von einem der Ultraschallsonotrode (17A) und des Ambosses (17B) gebildet ist,
wobei in dem Bandanbringungsschritt ein Abschnitt des Abdichtungsbands (S) mit vorbestimmter Breite an dem einen Ende der einen Fläche des bahnartigen Verpackungsmaterials auf eine derartige Weise angebracht wird, dass, bei Betrachtung von der inneren Stufe des überlappenden Abschnitts, ein erster Rand von beiden Rändern des Abdichtungsbands, der an einer Seite des überlappenden Abschnitts des Abdichtungsbands zu positionieren ist, bei Betrachtung in der Dickerichtung des rohrförmigen Verpackungsmaterials, an einer Position angeordnet wird, die von einer äußeren Stufe des überlappenden Abschnitts versetzt ist,
wobei in dem Bandanbringungsschritt ein Abschnitt des Abdichtungsbands mit vorbestimmter Breite an dem einen Ende der einen Fläche des bahnartigen Verpackungsmaterials auf eine derartige Weise angebracht wird, dass der erste Rand des Abdichtungsbands an einer Position angeordnet wird, die in einer Richtung weg von der inneren Stufe des überlappenden Abschnitts (T1) nicht weniger als 0,5 mm von der äußeren Stufe des überlappenden Abschnitts versetzt ist.

7. Herstellungsverfahren für einen Behälter zum Abfüllen von Inhalt, umfassend:
einen Bandanbringungsschritt zum Anbringen eines Abdichtungsbands (S) an einem Ende einer Fläche eines bahnartigen Verpackungsmaterials derart, dass das Abdichtungsband in der Breitenrichtung teilweise außerhalb des Verpackungsmaterials vorsteht;
einen vertikalen Abdichtungsschritt zum vertikalen Abdichten beider Enden des bahnartigen Verpackungsmaterials derart, dass sie sich mit einer vorbestimmten Breite überlappen, um ein rohrförmiges Verpackungsmaterial zu bilden und einen vorstehenden Abschnitt des Abdichtungsbands an einer inneren Fläche des rohrförmigen Verpackungsmaterials anzubringen, so dass er eine innere Stufe des überlappenden Abschnitts abdecken kann; und
einen seitlichen Abdichtungsschritt zum seitlichen Abdichten des rohrförmigen Verpackungsmaterials, das mit Inhalten befüllt ist, in einem Intervall, das der Länge eines Behälters entspricht, unter Verwendung einer seitlichen Abdichtungsvorrichtung, die eine Ultraschallsonotrode und einen Amboss beinhaltet, die öffenbar/schließbar an gegenüberliegenden Seiten des rohrförmigen Verpackungsmaterials bereitgestellt sind und Abdichtungsflächen aufweisen, die einander zugewandt sind und sich in einer Richtung senkrecht zu der Längsrichtung des rohrförmigen Verpackungsmaterial erstrecken und einen Absorptionsabschnitt aufweisen, der für Absorbtionsstufen, die zwischen dem überlappenden Abschnitt und dem anderen Abschnitt gebildet sind, in der Abdichtungsfläche von einem der Ultraschallsonotrode und des Ambosses gebildet ist,
wobei in dem Bandanbringungsschritt ein Abschnitt des Abdichtungsbands mit vorbestimmter Breite an dem einen Ende der einen Fläche des bahnartigen Verpackungsmaterials auf eine derartige Weise angebracht wird, dass, bei Betrachtung von der inneren Stufe des überlappenden Abschnitts, ein erster Rand von beiden Rändern des Abdichtungsbands, der an einer Seite des überlappenden Abschnitts des Abdichtungsbands zu positionieren ist, bei Betrachtung in der Dickerichtung des rohrförmigen Verpackungsmaterials, an einer Position angeordnet wird, die von einer äußeren Stufe des überlappenden Abschnitts versetzt ist,
wobei in dem Bandanbringungsschritt ein Abschnitt des Abdichtungsbands mit vorbestimmter Breite an dem einen Ende der einen Fläche des bahnartigen Verpackungsmaterials auf eine derartige Weise angebracht wird, dass der erste Rand des Abdichtungsbands an einer Position angeordnet wird, die in einer Richtung hin zu der inneren Stufe des überlappenden Abschnitts (T1) 0,5 bis 3 mm von der äußeren Stufe des überlappenden Abschnitts versetzt ist.

8. Herstellungsverfahren für einen Behälter zum Abfüllen von Inhalt nach einem der Ansprüche 6 oder 7, wobei das Abdichtungsband eine Breite aufweist, die das 1- bis 10-Fache der Breite des überlappenden Abschnitts (T1) beträgt.

9. Herstellungsverfahren für einen Behälter zum Abfüllen von Inhalt nach einem der Ansprüche 6 bis 8, wobei in dem seitlichen Abdichtungsschritt auf den ersten Rand des Abdichtungsbands und einen Abschnitt des rohrförmigen Verpackungsmaterials, der den ersten Rand überlappt, und einen zweiten Rand (S12) des Abdichtungsbands gegenüber dem ersten Rand und einen Abschnitt des rohrförmigen Verpackungsmaterials, der den zweiten Rand überlappt, durch Druckvorsprünge, die an den entsprechenden Positionen auf der Abdichtungsfläche von einem der Ultraschallsonotrode (17A) und dem Amboss (17B) gebildet sind, ein Druck ausgeübt wird.

10. Herstellungsverfahren für einen Behälter zum Abfüllen von Inhalt nach Anspruch 9, wobei jeder Druckvorsprung (179) eine rippenartige Form aufweist, die sich in der Längsrichtung der Abdichtungsfläche erstreckt und eine Länge von 1 bis 5 mm, eine Dicke von 0,1 bis 0,6 mm und eine vorstehende Höhe von 0,1 bis 0,5 mm aufweist.

11. Behälter zum Abfüllen von Inhalt, der unter Verwendung der Abfüllverpackungsmaschine (10) nach einem der Ansprüche 1 bis 5 hergestellt ist.

12. Behälter zum Abfüllen von Inhalt, der durch das Verfahren nach einem der Ansprüche 6 bis 10 hergestellt ist.

## Revendications

1. Machine de conditionnement et d'emballage (10) comprenant :
un dispositif de fixation de bande (13) pour fixer une bande de scellement à une extrémité d'une surface d'un matériau d'emballage en forme de bande de sorte que la bande de scellement fait saillie partiellement à l'extérieur du matériau d'emballage dans la direction de largeur ;
un dispositif de scellement vertical (15) pour sceller verticalement les deux extrémités du matériau d'emballage en forme de bande de sorte qu'elles se chevauchent entre elles sur une largeur prédéterminée pour former un matériau d'emballage tubulaire et pour fixer une partie saillante de la bande de scellement à une surface interne du matériau d'emballage tubulaire de sorte qu'elle peut couvrir un étage interne de la partie de chevauchement ; et
un dispositif de scellement latéral (17) pour sceller latéralement le matériau d'emballage tubulaire, rempli de contenu, à un intervalle correspondant à la longueur d'un récipient, le dispositif de scellement latéral comportant une corne à ultrasons et une enclume qui sont prévues de manière à pouvoir être ouvertes/fermées sur des côtés opposés du matériau d'emballage tubulaire, et qui ont des surfaces de scellement se faisant face et se prolongeant dans une direction perpendiculaire à la direction de longueur du matériau d'emballage tubulaire, et ayant une partie d'absorption, formée dans la surface de scellement de l'une de la corne à ultrasons et de l'enclume, pour absorber des étages formés entre la partie de chevauchement (T1) et l'autre partie,
**caractérisée en ce que** le dispositif de fixation de bande (13) fixe une partie de largeur prédéterminée de la bande de scellement à l'extrémité de la surface du matériau d'emballage en forme de bande de telle manière qu'un premier bord des deux bords de la bande de scellement, qui doit être situé sur un côté de partie de chevauchement de la bande de scellement lorsqu'on l'observe depuis l'étage interne de la partie de chevauchement, sera disposé au niveau d'une position déplacée par rapport à un étage externe de la partie de chevauchement (T1) lorsqu'il est vu dans la direction d'épaisseur du matériau d'emballage tubulaire,
dans lequel le dispositif de fixation de bande (13) fixe une partie de largeur prédéterminée de la bande de scellement à une extrémité de la surface du matériau d'emballage en forme de bande de telle manière que le premier bord de la bande de scellement sera disposé au niveau d'une position qui est déplacée d'au moins 0,5 mm par rapport à l'étage externe de la partie de chevauchement dans une direction s'éloignant de l'étage interne de la partie de chevauchement (T1).

2. Machine de conditionnement et d'emballage comprenant :
un dispositif de fixation de bande (13) pour fixer une bande de scellement à une extrémité d'une surface d'un matériau d'emballage en forme de bande de sorte que la bande de scellement fait saillie partiellement à l'extérieur du matériau d'emballage dans la direction de largeur ;
un dispositif de scellement vertical (15) pour sceller verticalement les deux extrémités du matériau d'emballage en forme de bande de sorte qu'elles se chevauchent entre elles sur une largeur prédéterminée pour former un matériau d'emballage tubulaire et pour fixer une partie saillante de la bande de scellement à une surface interne du matériau d'emballage tubulaire de sorte qu'elle peut couvrir un étage interne de la partie de chevauchement ; et
un dispositif de scellement latéral (17) pour sceller latéralement le matériau d'emballage tubulaire, rempli de contenu, à un intervalle correspondant à la longueur d'un récipient, le dispositif de scellement latéral comportant une corne à ultrasons et une enclume qui sont prévues de manière à pouvoir être ouvertes/fermées sur des côtés opposés du matériau d'emballage tubulaire, et qui ont des surfaces de scellement se faisant face et se prolongeant dans une direction perpendiculaire à la direction de longueur du matériau d'emballage tubulaire, et ayant une partie d'absorption, formée dans la surface de scellement de l'une de la corne à ultrasons et de l'enclume, pour absorber des étages formés entre la partie de chevauchement et l'autre partie,
**caractérisée en ce que** le dispositif de fixation de bande fixe une partie de largeur prédéterminée de la bande de scellement à l'extrémité de la surface du matériau d'emballage en forme de bande de telle manière qu'un premier bord des deux bords de la bande de scellement, qui doit être situé sur un côté de partie de chevauchement de la bande de scellement lorsqu'on l'observe depuis l'étage interne de la partie de chevauchement, sera disposé au niveau d'une position déplacée par rapport à un étage externe de la partie de chevauchement lorsqu'il est vu dans la direction d'épaisseur du matériau d'emballage tubulaire,
dans lequel le dispositif de fixation de bande fixe une partie de largeur prédéterminée de la bande de scellement à une extrémité de la surface du matériau d'emballage en forme de bande de telle manière que le premier bord de la bande de scellement sera disposé au niveau d'une position qui est déplacée de 0,5 à 3 mm par rapport à l'étage externe de la partie de chevauchement dans une direction vers l'étage interne de la partie de chevauchement.

3. Machine de conditionnement et d'emballage selon l'une quelconque des revendications 1 ou 2, dans laquelle la bande de scellement (S) a une largeur qui est de 1 à 10 fois la largeur de la partie de chevauchement (T1).

4. Machine de conditionnement et d'emballage selon l'une quelconque des revendications 1 à 3, dans laquelle des saillies de pression (179), l'une étant destinée à presser le premier bord (S11) de la bande de scellement (S) et une partie du matériau d'emballage tubulaire (T) qui chevauche le premier bord, et
l'autre étant destinée à presser un second bord de la bande de scellement opposé au premier bord et une partie du matériau d'emballage tubulaire qui chevauche le second bord, sont formées au niveau des positions correspondantes sur la surface de scellement de l'une de la corne à ultrasons (17A) et de l'enclume (17B) .

5. Machine de conditionnement et d'emballage (10) selon la revendication 4, dans laquelle chaque saillie de pression (179) a une forme de crête se prolongeant dans la direction de longueur de la surface de scellement et ayant une longueur de 1 à 5 mm, une épaisseur de 0,1 à 0,6 mm et une hauteur de saillie de 0,1 à 0,5 mm.

6. Procédé de fabrication d'un récipient de conditionnement de contenu, comprenant :
une étape de fixation de bande pour fixer une bande de scellement (S) à une extrémité d'une surface d'un matériau d'emballage en forme de bande (W) de sorte que la bande de scellement fait saillie partiellement à l'extérieur du matériau d'emballage dans la direction de largeur ;
une étape de scellement vertical pour sceller verticalement les deux extrémités du matériau d'emballage en forme de bande (W) de sorte qu'elles se chevauchent entre elles sur une largeur prédéterminée pour former un matériau d'emballage tubulaire et pour fixer une partie saillante de la bande de scellement à une surface interne du matériau d'emballage tubulaire (T) de sorte qu'elle peut couvrir un étage interne de la partie de chevauchement (T1) et
une étape de scellement latéral pour sceller latéralement le matériau d'emballage tubulaire, rempli de contenu, à un intervalle correspondant à la longueur d'un récipient à l'aide d'un dispositif de scellement latéral comportant une corne à ultrasons et une enclume qui sont prévues de manière à pouvoir être ouvertes/fermées sur des côtés opposés du matériau d'emballage tubulaire, et qui ont des surfaces de scellement se faisant face et se prolongeant dans une direction perpendiculaire à la direction de longueur du matériau d'emballage tubulaire, et ayant une partie d'absorption, formée dans la surface de scellement de l'une de la corne à ultrasons (17A) et de l'enclume (17B), pour absorber des étages formés entre la partie de chevauchement et l'autre partie,
dans lequel à l'étape de fixation de bande, une partie de largeur prédéterminée de la bande de scellement (S) est fixée à l'extrémité de la surface du matériau d'emballage en forme de bande de telle manière que le premier bord des deux bords de la bande de scellement, qui doit être situé sur un côté de partie de chevauchement de la bande de scellement lorsqu'on l'observe depuis l'étage interne de la partie de chevauchement, sera disposé au niveau d'une position déplacée par rapport à un étage externe de la partie de chevauchement lorsqu'il est vu dans la direction d'épaisseur du matériau d'emballage tubulaire,
dans lequel à l'étape de fixation de bande, une partie de largeur prédéterminée de la bande de scellement est fixée à l'extrémité de la surface du matériau d'emballage en forme de bande de telle manière que le premier bord de la bande de scellement sera disposé au niveau d'une position qui est déplacée d'au moins 0,5 mm par rapport à l'étage externe de la partie de chevauchement dans une direction s'éloignant de l'étage interne de la partie de chevauchement (T1).

7. Procédé de fabrication d'un récipient de conditionnement de contenu, comprenant :
une étape de fixation de bande pour fixer une bande de scellement (S) à une extrémité d'une surface d'un matériau d'emballage en forme de bande de sorte que la bande de scellement fait saillie partiellement à l'extérieur du matériau d'emballage dans la direction de largeur ;
une étape de scellement vertical pour sceller verticalement les deux extrémités du matériau d'emballage en forme de bande de sorte qu'elles se chevauchent entre elles sur une largeur prédéterminée pour former un matériau d'emballage tubulaire et pour fixer une partie saillante de la bande de scellement à une surface interne du matériau d'emballage tubulaire de sorte qu'elle peut couvrir un étage interne de la partie de chevauchement ; et
une étape de scellement latéral pour sceller latéralement le matériau d'emballage tubulaire, rempli de contenu, à un intervalle correspondant à la longueur d'un récipient à l'aide d'un dispositif de scellement latéral comportant une corne à ultrasons et une enclume qui sont prévues de manière à pouvoir être ouvertes/fermées sur des côtés opposés du matériau d'emballage tubulaire, et qui ont des surfaces de scellement se faisant face et se prolongeant dans une direction perpendiculaire à la direction de longueur du matériau d'emballage tubulaire, et ayant une partie d'absorption, formée dans la surface de scellement de l'une de la corne à ultrasons et de l'enclume, pour absorber des étages formés entre la partie de chevauchement et l'autre partie,
dans lequel à l'étape de fixation de bande, une partie de largeur prédéterminée de la bande de scellement est fixée à l'extrémité de la surface du matériau d'emballage en forme de bande de telle manière que le premier bord des deux bords de la bande de scellement, qui doit être situé sur un côté de partie de chevauchement de la bande de scellement lorsqu'on l'observe depuis l'étage interne de la partie de chevauchement, sera disposé au niveau d'une position déplacée par rapport à un étage externe de la partie de chevauchement lorsqu'il est vu dans la direction d'épaisseur du matériau d'emballage tubulaire,
dans lequel à l'étape de fixation de bande, une partie de largeur prédéterminée de la bande de scellement est fixée à l'extrémité de la surface du matériau d'emballage en forme de bande de telle manière que le premier bord de la bande de scellement sera disposé au niveau d'une position qui est déplacée de 0,5 à 3 mm par rapport à l'étage externe de la partie de chevauchement (T1) dans une direction vers l'étage interne de la partie de chevauchement.

8. Procédé de fabrication d'un récipient de conditionnement de contenu selon l'une quelconque des revendications 6 ou 7, dans lequel la bande de scellement a une largeur qui est de 1 à 10 fois la largeur de la partie de chevauchement (T1).

9. Procédé de fabrication d'un récipient de conditionnement de contenu selon l'une quelconque des revendications 6 à 8, dans lequel, à l'étape de scellement latéral, le premier bord de la bande de scellement et une partie du matériau d'emballage tubulaire qui chevauche le premier bord, et un second bord (S12) de la bande de scellement opposé au premier bord et une partie du matériau d'emballage tubulaire qui chevauche le second bord, sont pressés en pressant des saillies formées au niveau des positions correspondantes sur la surface de scellement de l'une de la corne à ultrasons (17A) et de l'enclume (17B).

10. Procédé de fabrication d'un récipient de conditionnement de contenu selon la revendication 9, dans lequel chaque saillie de pression (179) a une forme de crête se prolongeant dans la direction de longueur de la surface de scellement et ayant une longueur de 1 à 5 mm, une épaisseur de 0,1 à 0,6 mm et une hauteur de saillie de 0,1 à 0,5 mm.

11. Récipient de conditionnement de contenu fabriqué à l'aide de la machine de conditionnement et d'emballage (10) selon l'une quelconque des revendications 1 à 5.

12. Récipient de conditionnement de contenu fabriqué par le procédé selon l'une quelconque des revendications 6 à 10.
